# EUROPÄISCHE PATENTSCHRIFT

(11) **EP 0 406 616 B1**
(45) Veröffentlichungstag und Bekanntmachung des Hinweises auf die Patenterteilung: **02.03.1994**
(21) Anmeldenummer: 90111535.2
(22) Anmeldetag: 19.06.1990
(51) Int. Cl.: F16H 61/02, F16H 59/18

(54) **Verfahren und Vorrichtung zur Steuerung eines selbsttätig schaltenden Getriebes**
Method and device for controlling an automatic transmission
Procédé et dispositif pour commander une transmission automatique

(30) Priorität: 05.07.1989 DE 3922040
(43) Veröffentlichungstag der Anmeldung: 09.01.1991
(73) Patentinhaber: Dr.Ing.h.c. F. Porsche Aktiengesellschaft, 70435 Stuttgart (DE); ROBERT BOSCH GMBH, 70442 Stuttgart (DE); ZF FRIEDRICHSHAFEN Aktiengesellschaft, 88038 Friedrichshafen (DE)
(72) Erfinder: Hamm, Ludwig, Dipl.-Ing., D-7032 Sindelfingen (DE); Foeldi, Thomas, Dipl.-Ing., D-7000 Stuttgart 31 (DE); Stehle, Heinz, Dipl.-Ing., D-7251 Weissach (DE); Wehr, Thomas, Dipl.-Ing., D-7257 Ditzingen 1 (DE); Petersmann, Joseph, Dipl.-Ing., D-7251 Wimsheim (DE); Seidel, Willi, Dipl.-Ing., D-7147 Eberdinge-Hochdorf (DE); Runge, Wolfgang, Dr., D-7080 Ravensburg (DE); Gruhle, Wolf-Dieter. Dr., D-7992 Tettnang 1 (DE); Wendel, Peter, D-7993 Kressbronn (DE); Eschrich, Gerhard, Dipl.-Ing., D-7016 Gerlingen (DE); Schwamm, Ronald, Dipl.-Ing., D-7016 Gerlingen (DE)

(56) Entgegenhaltungen:
- EP-A- 0 127 507
- EP-A- 0 273 735
- WO-A-89/03319
- DE-A- 3 341 652
- DE-A- 3 615 961
- US-A- 4 350 057

## Beschreibung

Die Erfindung betrifft eine Verfahren und eine Vorrichtung nach der Gattung des Hauptanspruchs.

Übliche automatische Getriebesteuerungen von mit Brennkraftmaschinen angetriebenen Kraftfahrzeugen leiten beim Zurücknehmen des Fahrpedals in der Regel eine Hochschaltung ein. Bei Kurvenfahrten oder beim Bremsen ist dies jedoch nicht immer erwünscht, da derartige Lastwechsel unter Umständen zu unsicheren Fahrzuständen führen können oder beim Wiederbeschleunigen des Kraftfahrzeugs durch verstärktes Gasgeben eine oder mehrere Rückschaltungen erzwungen werden müssen.

Aus der DE-C-3 341 652 ist es in diesem Zusammenhang bekannt geworden, diese Hochschaltungen in Kurven durch Erfassen der Querbeschleunigung des Kraftfahrzeugs zu vermeiden. Hierdurch kann jedoch lediglich ein Schatten in Kurven vermieden werden.

Aus der EP-A-0 127 507 ist ein automatisches Fahrzeug -Stufengetriebe bekannt, bei dem ungewollte Übergänge zum nächst höheren Gang verhindert werden. Hierzu wird für jeden Getriebegang eine Grenzlinie negativer Beschleunigung erzeugt, oberhalb der im nächst höheren Gang das Fahrzeug noch positiv beschleunigt. Ein Übergang in den nächst höheren Gang wird nur dann zug elassen, wenn die Drosselklappenöffnung stabil ist, d.h. sich während einer vorgegebenen Zeit kaum noch ändert, wenn der Betriebspunkt sowohl oberhalb einer Schaltlinie als auch oberhalb der genannten Grenzlinie zu liegen kommt. Zur Bildung einer Hysterese ist oberhalb der ersten Grenzlinie eine zweite Grenzlinie vorgesehen; die erste Grenzlinie wird bei sinkendem und die zweite Grenzlinie bei steigendem Drosselklappenwinkel verwendet.

Es ist daher Aufgabe der Erfindung, ein Verfahren und eine Vorrichtung zu Steuerung eines selbstätig schaffenden Getriebes zu schaffen, die situationsgerechte Schaltungen (Gangstufenwechsel) durchzuführen vermag.

Diese Aufgabe wird erfindungsgemäß durch die kennzeichnenden Merkmale des Anspruchs 1 gelöst. Weitere, die Erfindung ausgestaltende Merkmale sind in den Unteransprüchen enthalten.

Die Vorteile der Erfindung sind in erster Linie darin zu sehen, daß ein Verfahren und eine Vorrichtung zur Steuerung eines selbsttätig schaltenden Getriebes geschaffen ist, die insbesondere in und vor Kurven und beim Bremsen situationsgerechte Schaltungen ausführt.

Dies wird mit einem nur geringfügig höheren Aufwand an durch Sensoren zu erfassenden Betriebs- oder Fahrparametern erreicht, so daß eine bereits vorhandene Getriebesteuerung für ein elektrohydraulisches Getriebe, bspw. vom Typ 4HP22 der Fa. ZF (siehe ATZ 85/1983 6, Seiten 401 bis 405), ohne größeren Aufwand an diese neue Lösung anpaßbar ist. Es ist neben einem einzigen zusätzlichen Sensor lediglich eine Änderung des Steuerungverfahrens notwendig.

Die Erfindung wird nachstehend anhand der in den Zeichnungen dargestellen Ausführungsformen erläutert.

Es zeigt:
- Fig. 1: Ein Blockschaltbild einer elektrohydraulischen Steuerung eines selbsttätig schaltenden Getriebes eines Kraftfahrzeugs,
- Fig. 2: ein Grenzlinie aqg=f(v), oberhalb der Gangstufenwechsel vermieden werden,
- Fig. 3: eine Grenzkennlinie azsg(nmot) zur Erkennung von Zug-/Schubetrieb.

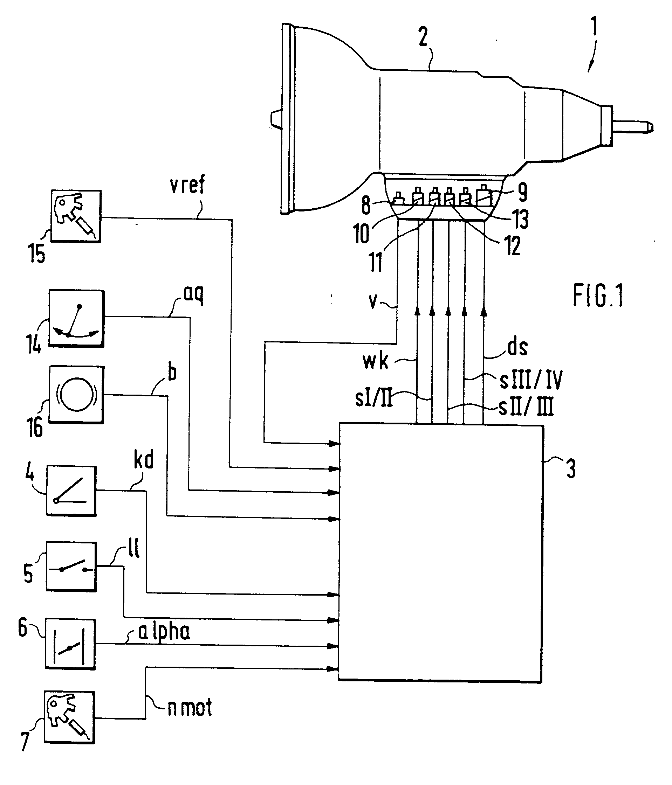

In Fig. 1 ist mit 1 eine elektro-hydraulische Steuerung eines selbsttätig schaltenden Kraftfahrzeuggetriebes 2 gezeigt, wie es bspw. im Bosch "Technische Berichte", 7 (1983) 4 auf den Seiten 160 bis 166 und in der ATZ 85 (1983) 6 auf den Seiten 401 bis 405 beschrieben ist.

Ein Steuergerät 3 steuert in Abhängigkeit von einem Kick- Down- Signal kd eines Kick-Down-Gebers 4 am Fahrpedal des Kraftfahrzeugs sowie einem Leerlaufsignal 11 eines Drosselklappenschalters 5 eines Drosselklappenwinkel-Signals alpha, eines Drosselklappenwinkelgebers 6 und eines Motordrehzahlsignals mot eines Motordrehzahlgebers 7 einer nichtgezeigten Brennkraftmaschine und eines Fahrgeschwindigkeitsignals v (Getriebeausgangsdrehzahlsignal), eines Getriebeausgangsdrehzahlgebers 8
- einen Druckregler 9 für ein Hydraulikfluid (Signalausgang ds)
- ein erstes Elektromagnetventil 10 zur Steuerung eines Wandlers bzw. einer Wandlerüberbrückungskupplung (Signalausgang wk)
- ein zweites Elektromagnetventil 11 zur Steuerung eines Gangstufenwechsels zwischen den Gangstufen I und II (Signalausgang sI/II)
- ein drittes Elektromagnetventil 12 zur Steuerung des Gangstufenwechsels zwischen den Gangstufen II und III (Signalausgang sII/III) und
- ein viertes Elektromagnetventil 13 zur Steuerung des Gangstufenwechsels zwischen den Gangstufen III/IV (Signalausgang sIII/IV).

Die Steuerung ist hierbei üblicherweise vom Fahrzeugführer über einen nicht gezeigten Wählhebel zur Vorwahl von Fahrstufen P, R, N, D, 3, 2, 1 beeinflußbar. Hiermit sind die Fahrstufen P (Parken), R (Rückwärtsgangstufe), N (Leergangstufe), D (selbsttätige Schaltung aller vier Gangstufen IV, III, II, I), 3 (selbsttätige Schaltung der drei untersten Gangstufen III, II, I) und 2 (selbsttätige Schaltung der Gangstufen II und I) und 1 (Festlegung der ersten Gangstufe I) anwendbar. Bei dem oben beschriebenen Getriebe ist ferner ein Programmwählschalter vorgesehen, mit dem wenigstens zwei Schaltprogramme, nach denen die vier Gangstufen in der Stufe D geschaltet werden, manuell anwählbar sind.

Diese Getriebesteuerung wird nun um einen Querbeschleunigungssensor 14, der ein Querbeschleungungssignal aq (einen Querbeschleunigungs- Signalwert aq(t)) erzeugt, und einen Geschwindigkeitsgeber 15, der eine Geschwindigkeit vref (Referenzgeschwindigkeits- Signal vref(t)) erzeugt, sowie einen Bremssignalgeber 16 (Bremssignal b) erweitert.

Es ist insbesondere wünschenswert, daß eine Hochschaltung des Getriebes vermieden wird, wenn das Fahrzeug sich bspw. einer Kurve nähert und der Fahrer vom Fahrpedal geht.

Es hat sich hierbei gezeigt, daß eine derartige Kurvenerkennung stattfinden kann, indem man die zeitliche Änderung des Drosselklappen- Signalwerts dalpha/dt abtastet. In der Regel nimmt nämlich ein Fahrer vor einer Kurve das Fahrpedal bzw. hiermit natürlich auch die Drosselklappe schneller zurück als er es unter normalen Umständen tut, um bspw. die Fahrgeschwindigkeit zu reduzieren.

Eine bei Loslassen des Fahrpedals von üblichen Getriebesteuerungen vorgenommene Hochschaltung wird hierbei um einem ersten Zeitraum (T1) verzögert, sofern eine Änderungsgeschwindigkeit dalpha/dt des Drosselklappensignalwerts alpha(t) einen ersten Grenzwert alphag1 unterschreitet.

Dieser erste Zeitraum T1 wird ferner bei einem Bremsvorgang des Kraftfahrzeugs zu Null gesetzt und nach Beendigung des Bremsvorgangs eine Hochschaltung um einen zweiten Zeitraum T2 verzögert. Damit wird erreicht, daß auch bei und unmittelbar nach einem Bremsvorgang nicht geschaltet wird.

Einen Zeitraum zu Null zu setzen bedeutet hier und im folgenden, daß in einer die Zeitverzögerung um den Zeitraum überwachenden Einrichtung der derzeit gespeicherte Wert gelöscht und durch einen neuen Wert, d.h. einen neuen Zeitraum, ersetzt wird. Während des Löschens des alten Wertes und des Einspeichern des neuen Wertes werden keine Schaltungen durchgeführt.

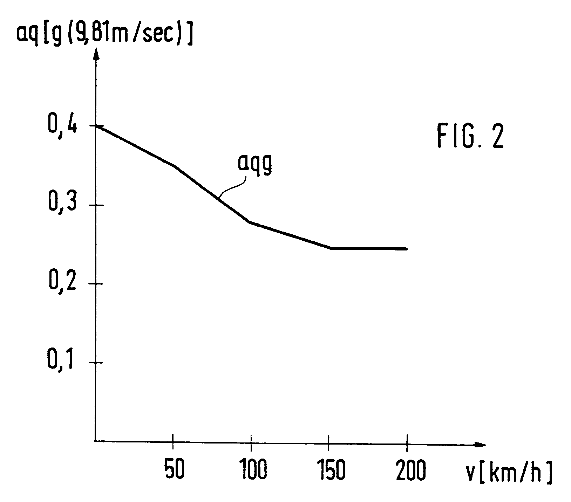

Ferner wird ein Gangstufenwechsel vermieden und/oder die Zeiträume T1, T2 zu Null gesetzt, sofern der Betrag des Querbeschleunigungs- Signalwerts |aq| eine von der Fahrgeschwindigkeit v(t) abhängige Grenzlinie aqg=f(v(t)), wie sie bspw. in Figur 2 gezeigt ist, überschreitet.

In gleicher Weise wird der Gangstufenwechsel vermieden, solange nach Unterschreiten der Grenzlinie aqg=f(v(t)) ein dritter Zeitraum T3 noch nicht verstrichen ist; hierdurch werden unnötige Lastwechsel bei schnellen Kurvenfahrten, die unter Umständen zu Fahrzeuginstabilitäten führen können, vermieden.

Die Zeiträume T1, T2, T3 und einem später noch beschriebenen Zeitraum T4 liegen bspw. zwischen 1,6s und 3s und können beispielsweise vom Schaltprogramm abhängen (längere Zeiträume für leistungsorientiertere Schaltprogramme).

Es kann ferner vorgesehen sein, eine Hochschaltung nach Ablauf der Zeiträume T1, T2 und T3 um einen vierten Zeitraum T4 zu verzögern, wenn der Motor noch nicht wieder im Zugbetrieb ist und die zeitliche Änderung des Fahrgeschwindigkeits-Signalwerts dv(t)/dt noch keine posiviten Werte angenommen hat, bspw. um einem Fahrer nach Durchfahren einer Kurve oder nach dem Bremsen etwas Zeit zu lassen (ohne daß eine Hochschaltung erfolgt), bis er wieder Gas gibt.

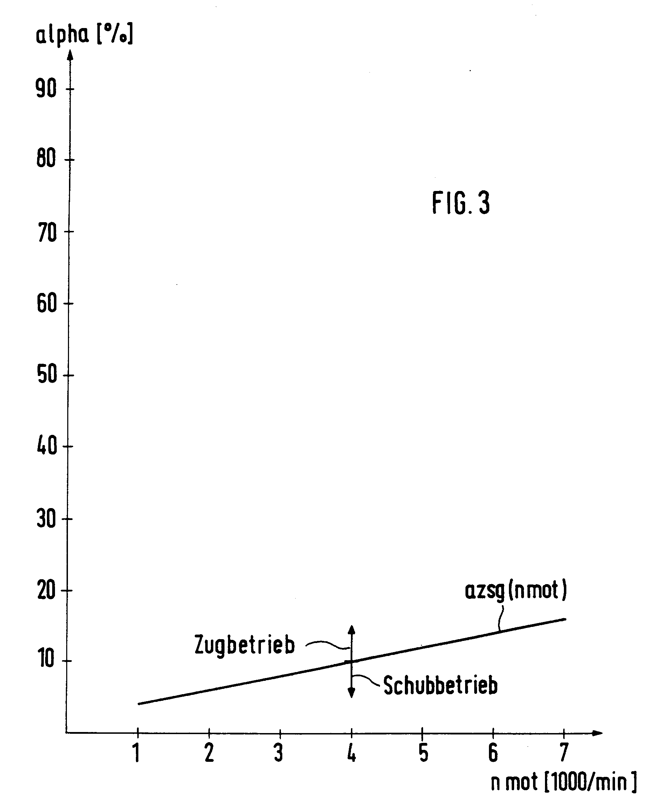

Hierbei wird der Zugbetrieb erkannt, wenn der Drosselklappensignalwert alpha(t) größer als eine von der Motordrehzahl abhängige Grenzkennlinie azsg=f(nmot), siehe Figur 3, ist und die zeitliche Änderung der Fahrzeuggeschwindigkeit dv(t)/dt positive Werte annimmt.

Als übergeordnete Funktion zu Vermeidung von instabilen Fahrzuständen, bspw. übermäßigem Schlupf an der Antriebsachse, kann es vorgesehen sein, diese Möglichkeiten der Unterbindung einer Hochschaltung nur dann zuzulassen, wenn eine Differenzgeschwindigkeit Dv=vref-v, Dv(t)=vref(t)-v(t) zwischen einer Geschwindigkeit vref, vref(t) einer nichtangetriebenen Achse und der an der angetriebenen Achse erfaßten Fahrgeschwindigkeit v(t) (gemessen über die Getriebeausgangsdrehzahl) eine zulässigen Differenzgeschwindigkeitswert Dvzul nicht überschreitet. Der Schlupf an der angetriebenen Achse wird hierbei durch die Differenzgeschwindigkeit Dv nachgebildet.

Ergänzend kann es hierzu vorgesehen sein, bei Überschreiten des zulässigen Differenzgeschwindigkeitswert Dvzul
- eine Wandlerüberbrückungskupplung eines mit einem Drehmomentwandler ausgestatteten Getriebes zu öffnen,
- eine Haltezeit T5 zu setzen, während der eine Hochschaltung nicht unterbunden werden kann,
- eine eingelegte Gangstufe g um eins zu erhöhen und
- Rückschaltungen zu verhindern,
wobei diese Funktionen wieder zurückgesetzt werden, wenn Zugbetrieb (wie oben beschrieben) erkannt wird.

In weiterer Ausgestaltung der Erfindung kann eine Unterbindung einer Hochschaltung nur dann zugelassen werden, wenn
- der Querbeschleunigungs- Signalwert (aq(t)) größer als ein zweiter Querbeschleunigungs- Grenzwert (aqg2) und
- die zeitliche Änderung des Drosselklappen- Signalwerts (dalpha(t)/dt) größer als ein zweiter Drosselklappengeschwindigkeits-Grenzwert (alphag2) und
- der Drosselklappen- Signalwert (alpha(t)) kleiner als ein bestimmter Prozentwert der motordrehzahlabhängigen Grenzkennlinie (azsg(nmot)) nach Fig. 3 ist.

Hiermit wird insbesondere verhindert, daß das Fahrzeug bei plötzlichem Lastwechsel während einer Kurvenfahrt eindrehen kann.

Die in den Figuren und der Beschreibung angegebenen Werte für verwendete Parameter können selbstverständlich nur Richtwerte sein. Das Verfahren selbst kann sowohl mit einer diskret aufgebauten Steuerung, als auch mittels eines Mikrorechners realisiert werden. Bei einer diskret aufgebauten Steuerung sind hierbei die einzelnen Verfahrensschritte als Module aufzubauen, während sie in einer Mikrorechnerlösung in Form von Programmen oder Programmteilen zu realisieren sind.

## Patentansprüche

1. Verfahren zur Steuerung eines vorzugsweise elektro- hydraulisch gesteuerten, selbsttätig schaltenden Getriebes (2), insbesondere eines mit einer Brennkraftmaschine ausgerüsteten Kraftfahrzeugs, wobei die Brennkraftmaschine mittels eines Leistungssteuerorgans, vorzugsweise eines Fahrpedals oder einer Drosselklappe beeinflußbar ist und Gangstufen (g) des Getriebes (2) über Schaltprogramme (SKFj) wenigstens abhängig von der Stellung der Drosselklappe (Drosselklappen- Signalwert alpha(t)) und von der Motordrehzahl (Motordrehzahl- Signalwert nmot(t)) automatisch geschaltet werden und eine mittels eines Querbeschleunigungsgebers erfaßte Querbeschleunigung (Querbeschleunigungs- Signalwert aq(t)) zur Verhinderung von Hochschaltungen herangezogen wird, **dadurch gekennzeichnet,** daß
- eine Hochschaltung um einen ersten Zeitraum (T1) verzögert wird, sofern
- Schubbetrieb erkannt ist und
- eine Änderungsgeschwindigkeit (dalpha(t)/dt) des Drosselklappen- Signalwerts (alpha(t)) einen ersten negativen Grenzwert (alphag1) unterschreitet, wobei
- die Verzögerung der Hochschaltung nur dann zugelassen wird, wenn eine Differenzgeschwindigkeit (Dv=vref-v, Dv(t)=vref(t)-v(t)) zwischen einer Geschwindigkeit (vref, vref(t)) einer nicht angetriebenen Achse und der an einer angetriebenen Achse erfaßten Fahrgeschwindigkeit (v, v(t)) einen zulässigen Differenzgeschwindigkeitswert (Dvzul) nicht überschreitet (dv(t)<Dvzul).

2. Verfahren nach Anspruch 1, **dadurch gekennzeichnet,** daß
- bei einem Bremsvorgang des Kraftfahrzeugs eine Hochschaltung unterbunden wird und
- nach Beendigung des Bremsvorgangs eine Hochschaltung unter Schub um einen zweiten Zeitraum (T2) verzögert wird, wobei der zweite Zeitraum (T2) anstelle des ersten Zeitraumes (T1) wirksam ist.

3. Verfahren nach Anspruch 1 oder 2, **dadurch gekennzeichnet,** daß ein Gangstufenwechsel vermieden wird, solange
- der Betrag des Querbeschleunigungs- Signalwerts (¦aq(t)¦) eine von der Fahrgeschwindigkeit (v(t)) abhängige Grenzlinie (aqg=f(v(t))) überschreitet, und
- nach Unterschreiten der Grenzlinie (aqg=f(v(t))) ein dritter Zeitraum (T3) noch nicht verstrichen ist, wobei der dritte Zeitraum (T3) anstelle der zuvor gesetzten Zeiträume (T1, T2) wirksam ist.

4. Verfahren nach Anspruch 1, 2 oder 3, **dadurch gekennzeichnet,** daß nach Ablauf der Zeiträume (T1, T2, T3) eine Hochschaltung erst wieder im Zugbetrieb und nach Ablauf eines weiteren, vierten Zeitraums (T4) zugelassen wird.

5. Verfahren nach wenigstens einem der vorangehenden Ansprüche, **dadurch gekennzeichnet,** daß Zugbetrieb erkannt wird, wenn
- der Drosselklappen- Signalwert (alpha(t)) größer als eine motordrehzahlabhängige Grenzkennlinie (azsg(nmot)) ist (alpha(t)>azsg(nmot)) und
- die zeitliche Änderung des Fahrgeschwindigkeits- Signalwerts (dv(t)/dt) positive Werte annimmt.

6. Verfahren nach einem der vorangehenden Ansprüche, **dadurch gekennzeichnet,** daß bei Überschreiten des zulässigen Differenzgeschwindigkertswerts (Dvzul)
- eine Wandlerüberbrückungskupplung eines mit einem Drehmomentwandler ausgestatteten Getriebes geöffnet,
- ein fünfter Zeitraum (T5) gesetzt wird, während der eine Hochschaltung nicht unterbunden werden kann,
- die eingelegte Gangstufe (g) um eins erhöht wird und
- Rückschaltungen verhindert werden, und diese Funktionen wieder zurückgesetzt werden, wenn
- Zugbetrieb erkannt wird und
- positive Werte der Änderung des Fahrgeschwindigkeits- Signalwerts (v(t)) vorliegen.

7. Verfahren nach einem der vorangehenden Ansprüche, **dadurch gekennzeichnet,** daß eine Unterbindung einer Hochschaltung nur dann zugelassen wird, wenn
- der Querbeschleunigungs- Signalwert (aq(t)) größer als ein zweiter Querbeschleunigungs- Grenzwert (aqg2)und
- die zeitliche Änderung des Drosselklappen- Signalwerts (dalpha(t)/dt) kleiner als ein zweiter Drosselklappengeschwindigkeits- Grenzwert (alphag2) und
- der Drosselklappen- Signalwert (alpha(t)) kleiner als ein bestimmter Prozentwert der motordrehzahlabhängigen Grenzkennlinie (azsg(nmot)) ist.

8. Vorrichtung zur Durchführung des Verfahrens nach wenigstens einem der vorangehenden Ansprüche, wobei eine elektrohydraulische Getriebesteuerung (1) vorzugsweise mit einem Mikrorechner ausgestattet ist, welcher mit Signalen von wenigstens einem Motordrehzahlsensor (7), einem Drosselklappensensor (6), einem Querbeschleunigungssensor (14) und einem Fahrgeschwindigkeitssensor (8) erfaßt und über diese Signale mittels Schaltprogrammen elektrohydraulische Gangstufenwechselventile (9 bis 13) ansteuernde Gangstufenwechselsignale (wk, ds, sI/II, sII/III, sIII/IV) erzeugt, **dadurch gekennzeichnet,** daß die Getriebesteuerung (1) ferner
- eine Einrichtung zur Bildung oder Nachbildung der zeitlichen Ableitung des mittels des Drosselklappensensors (6) erfaßten Drosselklappen- Signalwerts (alpha(t)) umfaßt,
- eine Vergleichseinrichtung die zeitliche Ableitung des Drosselklappen- Signalwerts (dalpha(t)/dt) mit einem ersten Drosselklappengeschwindigkeits- Grenzwert (alphag1) vergleicht und bei dessen Unterschreiten ein eine Hochschaltung unterbindendes Signal an die Getriebesteuerung abgibt, wenn
- eine zweite Vergleichseinrichtung feststellt, daß eine aus einer Geschwindigkeit (vref, vref(t)) einer nicht angetriebenen Achse und der vom Fahrgeschwindigkeitssensor (8) erfaßten Fahrgeschwindigkeit (v, v(t)) gebildete Differenzgeschwindigkeit (Dv=vref-v, Dv(t)=vref(t)-v(t)) einen zulässigen Differenzgeschwindigkeitswert (Dvzul) nicht überschreitet (dv(t)<Dvzul).

## Claims

1. A method of controlling an automatically shifting transmission (2), preferably controlled electro-hydraulically, in particular of a motor vehicle provided with an internal-combustion engine, wherein the internal-combustion engine is controllable by means of a power-control means, preferably an accelerator pedal or a throttle valve, and gears (g) of the transmission (2) are shifted automatically by way of gear-shift programs (SKFj) at least as a function of the setting of the throttle valve (throttle-valve signal value α(t)) and of the engine speed (engine-speed signal value nmot(t)) and a transverse acceleration (transverse-acceleration signal value aq(t)) detected by means of a transverse-acceleration pick-up is used to prevent shifts upwards, **characterized in that**
- shifting upwards is delayed by a first period (T1), if
- thrusting is detected and
- an alteration speed (dα(t)/dt) of the throttle-valve signal value (α(t)) falls below a first negative threshold value (αg1), wherein
- the delay in shifting upwards is permitted only if a differential speed (Dv=vref-v, Dv(t)=vref(t)-v(t)) between a speed (vref vref(t)) of a non-driven axle and the speed of travel (v, v(t)) detected on a driven axle does not exceed (dv(t)<Dvzul) a permissible differential-speed value (Dvzul).

2. A method according to Claim 1, **characterized in that**
- during braking of the motor vehicle a shift upwards is prevented, and
- at the end of braking a shift upwards during thrusting is delayed by a second period (T2), wherein the second period (T2) is effective instead of the first period (T1).

3. A method according to Claim 1 or 2, **characterized in that** a gear shift is prevented, provided that
- the amount of the transverse-acceleration signal value (¦aq(t)¦) exceeds a limit (aqg=f(v(t))) dependent upon the speed of travel (v(t)), and
- if the limit (aqg=f(v(t))) is not reached a third period (T3) has not yet elapsed, wherein the third period (T3) is effective instead of the periods (T1, T2) previously set.

4. A method according to Claim 1, 2 or 3, **characterized in that** after the periods (T1, T2, T3) have passed a shifting upwards is permitted only during engine loading and after a further, fourth period (T4) has passed.

5. A method according to at least one of the preceding Claims, **characterized in that** engine loading is recognized when
- the throttle-valve signal value (α(t)) is greater than a limiting characteristic (azsg(nmot)) dependent upon the engine speed (α(t)>azsg(nmot)), and
- the time alteration of the travelling-velocity signal value (dv(t)/dt) takes on positive values.

6. A method according to one of the preceding Claims, **characterized in that** when the permissible differential-speed value (Dvzul) is exceeded
- a converter-bridging clutch of a transmission provided with a torque converter is disengaged,
- a fifth period (T5) is set, during which shifting upwards cannot be prevented,
- the engaged gear (g) is increased by one, and
- shifts downwards are prevented
and these functions are restored when
- engine loading is recognized, and
- positive values of the alteration of the travelling-speed signal value (v(t)) are present.

7. A method according to one of the preceding Claims, **characterized in that** a prevention of shifting upwards is permitted only when
- the transverse-acceleration signal value (aq(t)) is greater than a second transverse-acceleration threshold value (aqg2), and
- the time alteration of the throttle-valve signal value (dα(t)/dt) is smaller than a second throttle-valve speed threshold value (αg2), and
- the throttle-valve signal value (α(t)) is smaller than a specific percentage of the limit characteristic (azsg(nmot)) dependent upon the engine speed.

8. A device for performing the method according to at least one of the preceding Claims, wherein an electro-hydraulic transmission control (1) is preferably provided with a micro-computer which detects signals from at least one engine-speed sensor (7), a throttle-valve sensor (6), a transverse-acceleration sensor (14) and a travelling speed sensor (8) and which generates gear-change signals (wk, ds, sI/II, sII/III, sIII/IV) actuating electro-hydraulic gear-change valves (9 to 13) by means of gear-shift programs by way of the said signals, **characterized in that** the transmission control (1) further
- comprises a device for forming or copying the time derivative of the throttle-valve signal value (α(t)) detected by means of the throttle-valve sensor (6),
- a comparison device compares the time derivative of the throttle-valve signal value (dα(t)/dt) with a first throttle-valve signal limit (αg1) and when it does not exceed the latter it delivers a signal preventing shifting upwards to the transmission control, if
- a second comparison device determines that a differential speed (Dv=vref-v, Dv(t)=vref(t)-v(t)) formed from a speed (vref vref(t)) of a non-driven axle and the speed of travel (v, v(t)) detected by the travelling-speed sensor (8) does not exceed (dv(t)<Dvzul) a permissible differential-speed value (Dvzul).

## Revendications

1. Procédé de commande d'une boîte de vitesses (2) automatique, à commande de préférence électrohydraulique, en particulier d'un véhicule automobile équipé d'un moteur à combustion, dans lequel le moteur à combustion peut être influencé au moyen d'un organe de commande de puissance, de préférence une pédale d'accélérateur ou un papillon des gaz, et des vitesses (g) de la boîte de vitesses (2) sont commutées automatiquement par des programmes de commutation (SKFj) au moins en fonction de la position du papillon des gaz (valeur de signal de papillon des gaz alpha(t)) et en fonction de la vitesse de rotation du moteur (valeur de signal de vitesse de rotation du moteur nmot(t)) et une accélération transversale (valeur de signal d'accélération transversale aq(t)), à enregistrer au moyen d' un capteur d' accélération transversale, est utilisée pour empêcher des passages à la vitesse supérieure, caractérisé en ce que
- un passage à la vitesse supérieure est retardé pendant un premier intervalle de temps (T1) si
- un freinage moteur est détecté et
- une vitesse de variation (dalpha(t)/dt) de la valeur de signal du papillon des gaz (alpha(t)) passe au-dessous d'une première valeur limite négative (alphag1),
- la temporisation du passage à la vitesse supérieure étant autorisée que si une vitesse différentielle (Dv = vref-v. Dv(t) = vref(t)-v(t)) entre une vitesse (vref, vref(t)) d'un essieu non moteur et la vitesse de marche (v, v(t)), enregistrée sur un essieu moteur, ne dépasse pas une valeur de vitesse différentielle autorisée (Dvzul (dv(t)<Dvzul).

2. Procédé selon la revendication 1, caractérisé en ce que
- lors d'un freinage du véhicule un passage à la vitesse supérieure est interdit et
- à la fin du freinage, un passage à la vitesse supérieure sous poussée est retardé d'un second intervalle de temps (T2), le second intervalle de temps (T2) opérant à la place du premier intervalle de temps (T1).

3. Procédé selon les revendications 1 ou 2, caractérisé en ce qu'un changement de vitesse est évité tant que
- la grandeur de la valeur du signal d'accélération transversale (¦aq(t)¦) dépasse une ligne limite (aqg = f(v(t))) dépendant de la vitesse de marche (v(t)) et
- après passage au-dessous de la ligne limite (aqg = f(v(t))) un troisième interval le de temps (T3) ne s'est pas encore écoulé, le troisième intervalle de temps (T3) opérant à la place des intervalles de temps (T1, T2) précédents.

4. Procédé selon les revendications 1, 2 ou 3, caractérisé en ce qu'après écoulement des intervalles de temps (T1, T2, T3) un passage à la vitesse supérieure n'est à nouveau autorisé qu'en traction et après écoulement d'un autre quatrième intervalle de temps (T4).

5. Procédé sel on l'une au moins des revendications précédentes caractérisé en ce que la traction est détectée si
- la valeur de signal du papillon des gaz (alpha(t)) est supérieure à une courbe caractéristique limite dépendant de la vitesse de rotation du moteur (azsg(nmot)) (alpha(t)>azsg(nmot)) et
- la variation dans le temps de la valeur du signal de vitesse de marche (dv(t)/dt) prend des valeurs positives.

6. Procédé sel on l'une des revendications précédentes, caractérisé en ce que dans le cas où la valeur de la vitesse différentielle autorisée (Dvzul) est dépassée
- un accouplement de pontage de convertisseur d'une boîte de vitesses équipée d'un convertisseur de couple de rotation est ouvert,
- un cinquième intervalle de temps (T5) est imposé pendant lequel un passage à la vitesse supérieure ne peut être interdit,
- la vitesse (g) insérée est augmentée de un et
- des passages à la vitesse inférieure sont empêchés,
et ces fonctions sont à nouveau remises à zéro si
- le mode traction est détecté et
- la variation de la valeur du signal de vitesse de marche (v(t)) prend des valeurs positives.

7. Procédé selon l'une des revendications précédentes, caractérisé en ce qu'une interdiction d'un passage à la vitesse supérieure n'est autorisée que si
- la valeur du signal d'accélération transversale (aq(t)) est supérieure à une deuxième valeur limite d'accélération transversale (aqg2) et
- la variation dans le temps de la valeur du signal de papillon des gaz (dalpha(t)/dt) est inférieure à une deuxième valeur limite de vitesse de papillon des gaz (alphag2) et
- la valeur du signal de papillon des gaz (alpha(t)) est inférieure à une valeur en pourcentage déterminée de la courbe caractéristique limite dépendant de la vitesse de rotation du moteur (azsg(nmot)).

8. Dispositif pour la mise en oeuvre du procédé selon l'une au moins des revendications précédentes, dans lequel une commande de boîte de vitesses (1) électrohydraulique est équipée de préférence d'un microordinateur, qui enregistre des signaux d'au moins un capteur de vitesse de rotation du moteur (7), un capteur de papillon des gaz (6), un capteur d'accélération transversale (14) et un capteur de vitesse de marche (8) et produit, par l'intermédiaire de ces signaux, au moyen de programmes de commutation, des signaux de changement de vitesse (wk, ds, sl/II > sll/III, slll/IV) commandant des soupapes électrohydrauliques (9 à 13) de changement de vitesse, caractérisé en ce que la commande de boîte de vitesses (1) comporte en outre
- un dispositif de formation ou de simulation de la dérivée dans le temps de la valeur du signal de papillon des gaz (alpha(t)) enregistrée au moyen du capteur de papillon des gaz (6),
- un dispositif de comparaison compare la dérivé dans le temps de la valeur de signal de papillon des gaz (dalpha(t)/dt) avec une première valeur limite de vitesse des papillon des gaz (alphag1) et dans le cas où celle-ci n'est pas atteinte délivre à la commande de boîte de vitesses un signal interdisant le passage à la vitesse supérieure si
- un second dispositif de comparaison constate qu'une valeur différentielle (Dv = vref-v, Dv(t) = vref(t)v(t)) formée à partir d'une vitesse (vref, vref(t)) d'un essieu non moteur et la vitesse de marche (v, v(t)) enregistrée par le capteur de vitesse de marche (8), ne dépasse pas une valeur de vitesse différentielle (Dvzul) autorisée.
